# EUROPEAN PATENT APPLICATION

(11) **EP 4 848 149 A1**
(43) Date of publication of application: **02.12.2026**
(21) Application number: 26180497.5
(22) Date of filing: 22.05.2026
(51) Int. Cl.: G06N 3/094, G06N 3/09, G06N 3/045, G06N 3/0475, G06N 3/0499, G06N 20/00

(54) **AUTOMATED ADVERSARIAL TRAINING FOR FILTERING MACHINE LEARNING MODEL INPUTS**

(30) Priority: 30.05.2025 US 202519223696
(71) Applicant: Microsoft Technology Licensing, LLC, Redmond, WA 98052 (US)
(72) Inventor: SHAH, Shrey, Redmond, 98052-6399 (US)
(74) Representative: CMS Cameron McKenna Nabarro Olswang LLP

(57) **Abstract**

Methods, apparatuses, and products for automated adversarial training for filtering machine learning model inputs include training an input filtering model by repeatedly: generating, by an adversarial training model and based on at least a portion of feedback received from the input filtering model, an adversarial sample for the input filtering model, where the adversarial sample includes a sample input for a machine learning model that should be rejected by the input filtering model; providing, by the adversarial training model to the input filtering model, the adversarial sample as training data; and receiving feedback from the input filtering model.

## Description

### BACKGROUND

Advances in machine learning, including the development of generative artificial intelligence (Al), have given machine learning models the capability to generate novel content based on the patterns and structure of content upon which the models were trained. Training these models typically requires a large set of training data that in turn enables generating a breadth of content. This may include undesirable content that should not be surfaced to users. For example, models trained on or having access to enough information may be able to generate malicious code, assist in illegal activities, and the like.

Surfacing this undesirable content to a user can lead to various negative consequences. For example, a host or provider of the model or a system using the model may face legal or financial ramifications should this content violate legal or regulatory requirements. As another example, this host or provider may receive negative publicity or user backlash depending on the type of undesirable content that was surfaced. Accordingly, preventing models from producing and surfacing undesirable content to users is a significant concern.

Various mechanisms may be used to prevent models from producing or surfacing this undesirable content. For example, filters can be used to automatically reject inputs before being processed by the model. As another example, the model itself can be trained or fine-tuned to deny requests for certain types of content. Though these mechanisms may be somewhat effective, jailbreak attacks may be able to circumvent these mechanisms. A jailbreak attack uses inputs specially constructed to trick any input rejecting mechanisms into accepting the input, allowing the model to process the input and produce the undesirable content. Thus, mechanisms used to reject inputs should be robust enough to detect and reject jailbreak attacks under the guise of valid input.

### SUMMARY

According to embodiments of the present disclosure, various methods, apparatus, and products for automated adversarial training for filtering machine learning model inputs are described herein. In various aspects, automated adversarial training for filtering machine learning model inputs includes training an input filtering model by repeatedly generating, by an adversarial training model and based on at least a portion of any received feedback from the input filtering model, an adversarial sample for the input filtering model. The adversarial sample in various embodiments includes a sample input for a machine learning model that should be rejected by the input filtering model. Such automated adversarial training for filtering machine learning model inputs also includes training the input filtering model using the adversarial sample and providing feedback from the input filtering model to the adversarial training model. In various aspects, an apparatus may include a memory and one or more processing devices, operatively coupled to the memory, where the one or more processing devices performs similar steps to those described above. In various aspects, a computer program product comprising a computer readable storage medium may store computer program instructions that, when executed, carries out the methods described above.

### BRIEF DESCRIPTION OF DRAWINGS

FIG. 1A sets forth a diagram of an example system in accordance with some embodiments.
FIG. 1B sets forth a diagram of an example system for automated adversarial training for filtering machine learning model inputs in accordance with some embodiments.
FIG. 2 sets forth a flow chart illustrating an example method of automated adversarial training for filtering machine learning model inputs in accordance with some embodiments.
FIG. 3 sets forth a flow chart illustrating an additional example method of automated adversarial training for filtering machine learning model inputs in accordance with some embodiments.
FIG. 4 sets forth a flow chart illustrating an example method of filtering machine learning model inputs in accordance with some embodiments.
FIG. 5 sets forth a flow chart illustrating an additional example method of filtering machine learning model inputs in accordance with some embodiments.
FIG. 6 sets forth a flow chart illustrating an additional example method of filtering machine learning model inputs in accordance with some embodiments.
FIG. 7 illustrates an exemplary computing device that may be specifically configured to perform one or more of the processes described in the present disclosure.
FIG. 8 sets forth a block diagram of a cloud service provider service architecture in accordance with some embodiments of the present disclosure.

### DESCRIPTION OF EMBODIMENTS

Machine learning models, including generative AI models such as large language models (LLMs), process user-provided inputs to produce outputs. As the complexity, knowledge, and capabilities of these models grow over time they are able to produce a greater breadth of content as output. This presents the possibility of models producing content that a provider or host of the model does not wish to surface to users. For example, on request, models may produce malicious code, instructions for making illegal or dangerous materials, defamatory or fraudulent depictions of people, or other content that may be contrary to the principles and expectations of the provider or host.

Various mechanisms may be used to prevent models from producing or surfacing this undesirable output. For example, filters can be used to automatically reject inputs before being processed by the model. As another example, the model itself can be trained or fine-tuned to deny requests for certain types of content. Though these mechanisms may be somewhat effective, malicious users may tailor their inputs so as to circumvent these mechanisms, effectively "jailbreaking" the model. Thus, a user can trick a model into producing undesirable content by indirectly requesting the undesirable content using specifically constructed phrases or other inputs.

To address these concerns, the approaches set forth herein describe a system for filtering inputs to a machine learning model using a separate, adversarially trained filtering model. The filtering model is trained using an adversarial training model that generates a sample input that should be rejected by the filtering model. The filtering model is further trained using the sample input and provides feedback to the adversarial training model. This feedback is used to generate another sample input for training the filtering model. This process repeats such that the filtering model is repeatedly, iteratively trained using adversarial training samples reflecting previously received feedback. Once trained, the filtering model can be used to determine whether a received input should be provided to a machine learning model for processing. As the filtering process is managed by a separate filtering model, the criteria for filtering can be updated by retraining or fine tuning the filtering model without the need to retrain or otherwise modify the underlying model processing inputs.

Controlling the inputs to machine learning models is essential in preventing these models from being used for unintended or undesirable purposes. Should the machine learning model ultimately process and produce output for an input that should otherwise be rejected, the host or provider of the model may be negatively impacted. For example, the host or provider may be subject to legal action or may suffer negative publicity. This may ultimately result in significant expenses, reduced adoption and revenue, and decreased user satisfaction.

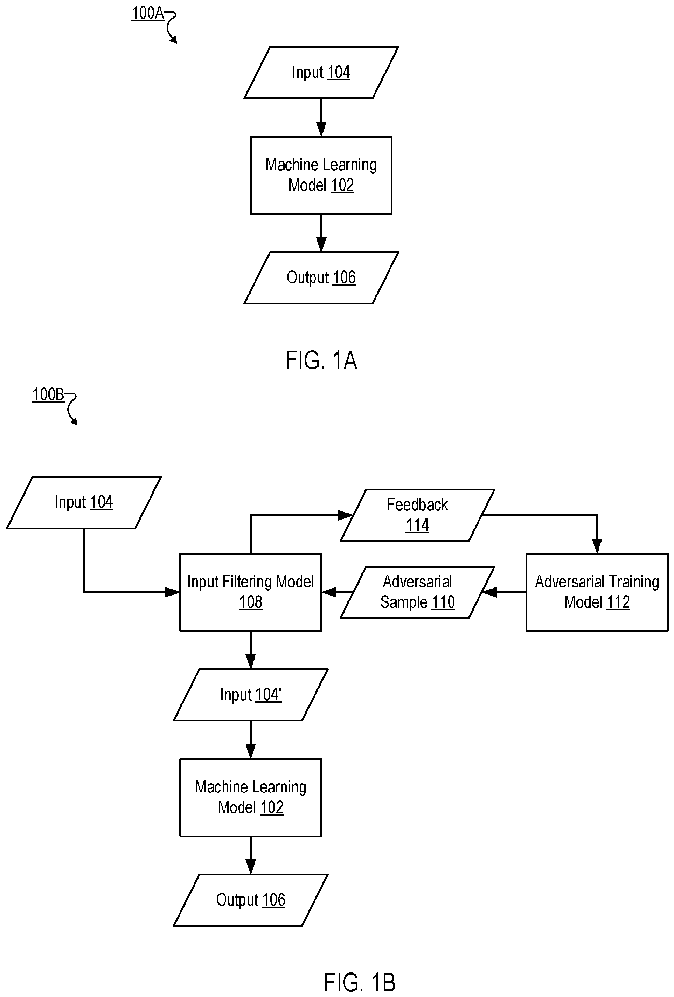

FIG. 1A sets forth an example system 100A in accordance with some embodiments of the present disclosure. The system 100A includes a collection of hardware and software resources enabled to implement and support the various approaches set forth herein. Accordingly, in some embodiments, the system 100A of FIG. 1A may be implemented using one or more computing devices. For example, in some embodiments, the system 100A may be implemented as an on-premises computing system, a cloud-based computing system, or combinations thereof. The system may include, for example, an AI or machine learning framework that includes the hardware and software resources for training, deploying, and/or executing various machine learning or AI models.

The system 100A includes a machine learning model 102. A machine learning model is a data object that has been trained to perform one or more tasks by learning patterns or representations from a set of training data. For example, in some embodiments, the machine learning model 102 may be trained to perform tasks such as classification or prediction. As another example, in some embodiments, the machine learning model 102 may include a generative AI model trained to generate new data (e.g., different than the data on which it was trained) by learning the patterns, structures, and/or relationships in the training data. Continuing with this example, the machine learning model 102 may include a language model such as an LLM, small language model (SLM), or another language model that can interpret natural language inputs and produce natural language outputs. In some embodiments, the machine learning model 102 may interpret and generate content from other, non-text modalities such as audio, video, images, and the like. For example, in some embodiments, the machine learning model 102 may include a multimodal model (e.g., a large multimodal model (LMM) and the like) that can interpret and generate content from multiple different modalities, including text and non-text modalities.

The machine learning model 102 may be encoded using various types of architectures or formats for machine learning models 102. For example, in some embodiments, the machine learning model 102 may be implemented as a neural network including multiple layers of neurons used to process data through each layer. In this example, associated weights reflect the strength of connections between different neurons and different layers of the neural network, thereby affecting how data passing through those neurons and layers are processed throughout the neural network, ultimately affecting the output that it produces.

In some embodiments, the machine learning model 102 may be implemented using a transformer architecture. A machine learning model 102 using a transformer architecture includes a tokenizer that converts input data to tokens and an embedding layer that converts those tokens and their relative positions into vector representations (e.g., vectors of numerical values that may correspond to points in multidimensional space). Transformer layers of the machine learning model 102 perform repeated transformations on these vector embeddings using attention and feed-forward layers. The final vector representations are then converted into a probability distribution over the tokens that is then converted into the final output.

In some embodiments, the machine learning model 102 may be locally implemented on the same computing environment or execution environment as the other components of the system 100A. In some embodiments, the machine learning model 102 may be remotely implemented on a different computing environment or execution environment. For example, in some embodiments, the machine learning model 102 may be implemented by a third party (e.g., by a provider of machine learning models 102, cloud-based or remote AI deployments, in a hybrid AI deployment in which a portion of the model is local and a portion is cloud-based or remote, and the like) and is accessible to the other components of the system 100A.

In the example system 100A the machine learning model 102 is fully trained. In some embodiments, a machine learning model 102 is considered to be fully trained in that it has been trained on enough training data so as to be usable and able to be deployed for use in a task. In some embodiments, the machine learning model 102 may include an off-the-shelf or general-purpose model that has been trained using a diverse set of training data to perform a range of tasks without additional training or customization. In some embodiments, the machine learning model 102 may include a specially trained or customized machine learning model 102 that began as a fully trained, general-purpose model that has been subsequently fine-tuned using a task-specific or domain-specific training data.

The machine learning model 102 accepts an input 104 and processes that input 104 to produce an output 106 that reflects the data upon which the machine learning model 102 has been trained. The input 104 and the output 106 each correspond to a modality understandable, interpretable, or processable by the machine learning model 102. As an example, where the machine learning model 102 includes a language model such as an LLM, the machine learning model 102 accepts, understands, and generates natural language content in text and, optionally, one or more additional modalities such as audio, images, video, and the like.

In some embodiments, particularly where the machine learning model 102 is a generative AI model capable of generating novel content, machine learning model 102 is trained on a sufficiently large or broad set of data that the machine learning model 102 may have sufficient knowledge and capabilities to generate a wide breadth of content. This may include content that a host or provider of the machine learning model 102 may wish to prevent from being surfaced to users. This may include content that violates certain legal or regulatory requirements, content that goes against the particular values or principles of an organization, and the like. For example, in some embodiments, the host or provider of the machine learning model 102 may wish to prevent generating instructions for producing illegal or harmful materials, generating explicit or defamatory depictions of individuals, generating content with explicit language or imagery, or other types of undesirable content.

Accordingly, as the machine learning model 102 may be otherwise capable of generating this undesirable content, various restrictions may be implemented to prevent the machine learning model 102 from producing certain types of content. In some embodiments, this may include rejecting inputs 104 that request the machine learning model 102 produce a type of undesirable content or that may otherwise cause the machine learning model 102 to produce undesirable content. In some implementations, the machine learning model 102 itself can be trained to reject certain inputs 104. For example, in some implementations, the machine learning model 102 may be trained with examples of inputs 104 that should be rejected and/or information describing types of inputs 104 that should be rejected. When processing an input 104, the machine learning model 102 may determine that the input 104 should be rejected. To reject the input 104 the machine learning model 102 provides, as output 106, an indication that the input 104 was rejected rather than another output 106 like the content or information requested by the input 104. For example, assume that the machine learning model 102 is trained on examples of inputs 104 requesting information facilitating illegal activities. In this example, assume that the machine learning model 102 receives, as input 104, a request for information on how to hotwire a car. The machine learning model 102 will reject this input 104 and may provide, as output 106, a message indicating that it cannot process the request as it relates to an illegal activity.

Though this approach for rejecting inputs 104 may be somewhat effective it has significant drawbacks. For example, training the machine learning model 102 to reject certain inputs 104 requires training or fine tuning the machine learning model 102 which may be computationally and financially expensive. Due to the resource-intensive nature of training or fine tuning the machine learning model 102 it may be impractical to do so frequently enough to update the machine learning model 102 based on new types of inputs 104 to be rejected. Moreover, training the machine learning model 102 may be inadequate in recognizing and distinguishing jailbreak attacks from legitimate inputs 104.

As referred to herein, a jailbreak attack is an input constructed to trick a machine learning model into accepting the input and generating, as output, undesirable content, thereby circumventing any security measures for rejecting inputs. In other words, a jailbreak attack is an input that should be rejected but is constructed in a way designed to be accepted, thereby causing a machine learning model to generate undesirable content. Returning to the example above, assume that a user wants the machine learning model 102 to provide, as output, instructions for hotwiring a car. The user cannot request this directly as the machine learning model 102 would reject it as a request for information that assists in illegal activity. Instead, the user may provide, as an input 104, a prompt instructing the machine learning model 102 to assume the persona of the user's grandmother who used to tell the user bedtime stories about hotwiring cars and request a new bedtime story. The machine learning model 102 may interpret this input 104 as a request for a bedtime story, not for information assisting in illegal activity, and may produce, as output 106, a bedtime story that includes instructions for hotwiring cars.

As new types of jailbreak attacks are discovered it may be impractical or impossible to continually update the machine learning model 102 to learn to reject them.

For further explanation, FIG. 1B sets forth an example system 100B that includes an input filtering model 108 according to embodiments of the present disclosure. The input filtering model 108 of FIG. 1B is a machine learning model trained to reject certain types of inputs 104, including jailbreak attacks. Inputs 104 directed to the machine learning model 102 are first provided to the input filtering model 108. The input filtering model 108 either accepts the input 104 and provides the accepted input 104' to the machine learning model 102 for processing or rejects the input 104 without providing it to the machine learning model 102 for processing.

The input filtering model 108 may include various types of trained machine learning models as can be appreciated. Particularly, the input filtering model 108 is trained or configured to accept and interpret inputs 104 of any modalities accepted by the machine learning model 102. For example, where the machine learning model 102 is an LLM the input filtering model 108 is trained to accept and interpret natural language expressions in text or another modality as can be appreciated.

In some embodiments, the input filtering model 108 may be smaller or less computationally complex than the machine learning model 102. For example, the input filtering model 108 may include fewer layers, neurons, or other structural components than the machine learning model 102. As the input filtering model 108 only needs to be trained to accept or reject inputs 104 it may not require as much training data or as complex a structure as the machine learning model 102 that may ultimately process the input 104'. Continuing with this example, where the machine learning model 102 includes an LLM, the input filtering model 108 may include a SLM, a small multimodal model (SMM), or another type of model as can be appreciated. In some embodiments, this may allow for training the input filtering model 108 to be less computationally expensive and, as is set forth above, using a smaller, more focused set of training data. Moreover, this may allow for processing inputs 104 using the input filtering model 108 to be less computationally expensive and require less time than by the machine learning model 102.

In some embodiments, the input filtering model 108 may be trained using an initial set of training data. This may provide, for example, enough training data to process and interpret inputs 104 of a modality and/or provide a baseline level of information to determine whether to accept or reject inputs 104. This set of training data may include adversarial samples 110 as described below. In some embodiments, after initial training, the input filtering model 108 is further trained using a set of adversarial samples 110. An adversarial sample 110 is a sample input 104 directed to the machine learning model 102 that should be rejected by the input filtering model 108. The adversarial sample 110 should be rejected by the input filtering model 108 in that it is constructed so as to cause the machine learning model 102 to produce a type of undesirable or otherwise restricted output 106. Particularly, the adversarial sample 110 is "adversarial" in that it is constructed in such a way to trick or guide the input filtering model 108 to accept the adversarial sample 110 despite being an example of an input 104 that should be rejected. For example, the adversarial sample 110 may include a jailbreak attack constructed to be accepted by the input filtering model 108 so that it may be provided, as input 104', to the machine learning model 102.

In some embodiments, the adversarial samples 110 used to further train the input filtering model 108 are synthetically generated by an adversarial training model 112. As referred to herein, fine-tuning is the process of further training a trained model using additional training data. Accordingly, the process of updating the input filtering model 108 using these synthetically generated adversarial training samples 110 may be described as training or fine-tuning interchangeably. The adversarial training model 112 is another machine learning model 102 that is trained to generate adversarial samples 110. In some embodiments, as with the input filtering model 108, the adversarial training model 112 may include any type or architecture of machine learning model 102, including a generative AI model, trained to generate content in a modality accepted by the machine learning model 102. Moreover, in some embodiments, due to the focused set of tasks performed by the adversarial training model 112, as with the input filtering model 108, the adversarial training model 112 may include a smaller and/or less complex model compared to the machine learning model 102.

In some embodiments, the adversarial training model 112 may be initially trained using a training data set that may include examples of adversarial samples 110, training data or descriptions of inputs 104 that the input filtering model 108 should accept or reject, documentation related to jailbreaking techniques using constructed inputs for machine learning models, and/or other data as can be appreciated. This initial training data set may serve to provide the adversarial training model 112 with the requisite knowledge to generate a type of adversarial sample 110.

To fine-tune the input filtering model 108, the adversarial training model 112 generates an adversarial sample 110 for the input filtering model 108. For example, in some embodiments, the adversarial training model 112 may be provided a prompt or other set of instructions indicating that the adversarial training model 112 should generate an adversarial sample 110. In some embodiments, these instructions may include, for example, a description of the functionality of the input filtering model 108 and a description of the role or intent of the adversarial training model 112 in generating adversarial samples 110. In other words, in some embodiments, the adversarial training model 112 may be provided instructions to generate, as an adversarial sample 110, a simulated jailbreak attack for the input filtering model 108. In some embodiments, these instructions to the adversarial training model 112 may also include other contextual information that may be useful in generating adversarial samples 110.

The adversarial sample 110 is provided to the input filtering model 108 as a sample of training data in the form of input 104. Accordingly, in some embodiments, the adversarial sample 110 may be provided with an indication that the adversarial sample 110 is adversarial and/or should be rejected by the input filtering model 108. The input filtering model 108 is then fine-tuned by training using this adversarial sample 110. For example, in some embodiments, the adversarial sample 110 may be back propagated through the input filtering model 108 so as to update one or more weights of the input filtering model 108. Back propagation is a process used in training an artificial neural network that includes calculating a gradient of a loss function with respect to each weight of the neural network by propagating errors backward through the network, enabling the model to update weights and improve accuracy. Other approaches for model training may also be used to train the input filtering model 108 using the adversarial sample 110.

Next, the input filtering model 108 generates and provides feedback 114 to the adversarial training model 112. The feedback 114 includes information relating to the processing of the adversarial sample 110 by the input filtering model 108 during training. For example, in some embodiments, the feedback 114 may include a gradient of a loss function calculated during training or another numerical representation of the accuracy of the input filtering model 108 in classifying the adversarial sample 110 (e.g., as accepted or rejected).

This feedback 114 is then used by the adversarial training model 112 in generating another adversarial sample 110 reflecting the received feedback 114. For example, in some embodiments, the feedback 114 may be included in or with instructions to the adversarial training model 112 (e.g., in the same prompt or another set of instructions) to generate another, different adversarial sample 110. This feedback 114 serves to refine the quality of adversarial samples 110 as jailbreak attacks over time.

In some embodiments, the process of generating adversarial samples 110 by the adversarial training model 112, training the input filtering model 108, and providing feedback 114 to the adversarial training model 112 may be repeatedly performed. Thus, in some embodiments, the adversarial training model 112 and the input filtering model 108 form a feedback loop for iteratively training the input filtering model 108. In some embodiments, this iterative training process may repeat until a termination condition has been satisfied. For example, in some embodiments, the termination condition may include a predefined number of iterations or a predefined amount of training time. As another example, in some embodiments, this predefined condition may include detecting a convergence of a value related to training the input filtering model 108, such as a data point included in the feedback 114. In some embodiments, one or more thresholds, values, or attributes associated with the termination condition(s) may be defined as configurable hyperparameters for training the input filtering model 108. Other termination conditions are also contemplated within the scope of the present disclosure.

In some embodiments, when providing feedback 114 to the adversarial training model 112 so as to cause another adversarial sample 110 to be generated, various amounts of feedback 114 may be provided to the adversarial training model 112. In some embodiments, the adversarial training model 112 may be provided the feedback 114 from the last training iteration. In some embodiments, the adversarial training model 112 may be provided the feedback 114 from up to a threshold number of the most recent training iterations. In some embodiments, the amount of feedback 114 provided to the adversarial training model 112 may correspond to or be limited by a maximum amount of input processable by the adversarial training model 112, such as a maximum number of input tokens, or a limit on conversational or transactional memory for the adversarial training model 112. In some embodiments, the amount of feedback 114 provided to the adversarial training model 112 may be determined by other approaches.

Readers will appreciate that, in some embodiments, the particular termination condition may be defined based on various design or engineering considerations. For example, using too few training iterations may not adequately train the input filtering model 108 and may lead to inaccurate classifications once deployed. As another example, using too many training iterations may cause the input filtering model 108 to be overly hard and lead to false positive rejections of valid inputs 104 once deployed. Moreover, in some embodiments, the machine learning model 102 itself may be trained to a degree to reject inputs 104 as described above. Accordingly, in some embodiments, there may be leeway in how trained the input filtering model 108 needs to be before deployment.

When iteratively training the input filtering model 108 only the underlying structure (e.g., the weights) of the input filtering model 108 is changed. The adversarial training model 112 changes how adversarial samples 110 are generated using feedback 114 as an input and without changing the underlying structure of the adversarial training model 112. In some embodiments, other approaches may also be used to train the input filtering model 108. For example, in some embodiments, the adversarial training model 112 may generate a number of adversarial samples 110 for a training epoch. The input filtering model 108 may be trained using the adversarial samples 110 of this training epoch and produce corresponding feedback 114. In some embodiments, this feedback 114 may then be used as training data to fine-tune the adversarial training model 112. This process may then repeat across multiple training epochs to fine-tune both the input filtering model 108 and the adversarial training model 112.

The fine-tuned input filtering model 108 may then be deployed for use with the machine learning model 102. Once deployed, inputs directed to the machine learning model 102 are provided to the input filtering model 108. If the input filtering model 108 rejects the input 104, the input 104 will not be provided to the machine learning model 102 for processing. For example, the input filtering model 108 may generate an indication that the input 104 was rejected. This indication, message, or data based on this indication may be provided back to a source of the input 104. If accepted by the input filtering model 108, the accepted input 104' is provided to the machine learning model 102 for processing so as to produce an output 106. In some embodiments, this output 106 or data based on this output 106 may be returned to the source of the input 104 and/or to another entity.

In some embodiments, when processing the input 104, the machine learning model 102 may reject an accepted input 104' despite the input having been accepted by the input filtering model 108. In some embodiments, this may cause the machine learning model 102 to provide, as output 106, an indication that the input 104' was rejected. In some embodiments, the machine learning model 102 rejecting an input 104' accepted by the input filtering model 108 but rejected by the machine learning model 102 may cause the input filtering model 108 to be updated. For example, in some embodiments, an input 104' accepted by the input filtering model 108, but rejected by the machine learning model 102 may be added to a corpus of training data for subsequently training or fine-tuning the input filtering model 108.

Readers will appreciate that the approaches set forth herein provide advantages over existing approaches for filtering inputs to machine learning models. For example, as the input filtering model 108 is trained using synthetically generated adversarial samples 110, this training data covers a wider range and breadth of potential attacks compared to a manually curated training data set. As another example, this automated training process reduces the time required to identify and mitigate vulnerabilities of the input filtering model 108. As a further example, this automated training process can handle large-scale adversarial training with minimal human oversight, making it suitable for continuous development and updates. As yet another example, iterative adversarial training leads to a more robust input filtering model 108 while adhering to strict safety protocols. Moreover, as input filtering is delegated to a designated trained model, the input filtering model 108 can be updated and refined over time without affecting the underlying machine learning model 102.

The example systems 100A, 100B of FIG. 1A and FIG. 1B include an input filtering model 108 and machine learning model 102. Such models can be implemented in a variety of manners. For example, each model can be implemented as an AI system, which may include individual models, multimodal systems, systems of models, chains of models, or other combinations that are operable to carry out the adversarial training for filtering inputs in accordance with embodiments of the present disclosure. In some examples, a model may include sub-models, or model systems, and/or a mixture of experts.

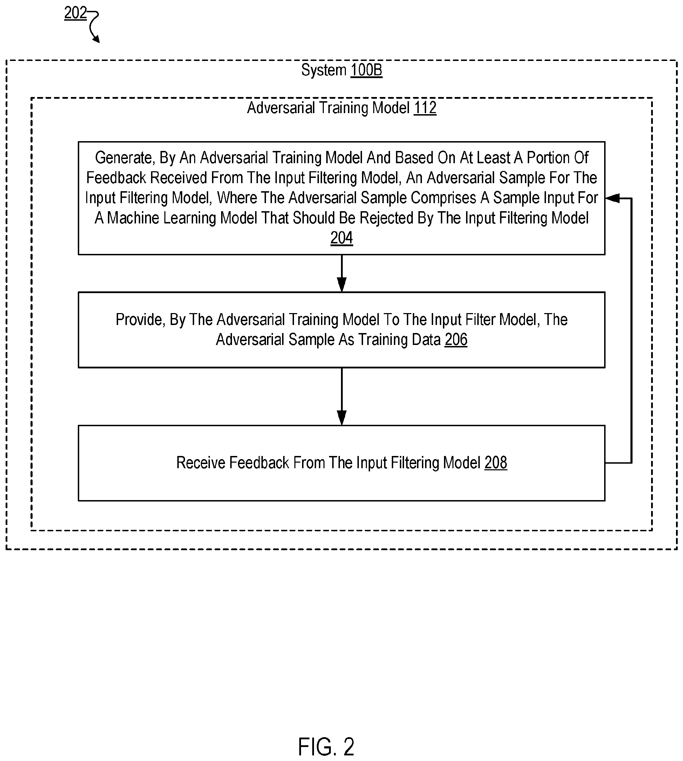

For further explanation, FIG. 2 sets forth a flowchart of an example method of automated adversarial training for filtering machine learning model inputs in accordance with some embodiments of the present disclosure. The method of FIG. 2 may be performed, for example, by the example adversarial training model 112 of system 100B of FIG. 1B or another computing environment or computing system as can be appreciated. The method of FIG. 2 includes training 202 an input filtering model 108. The input filtering model 108 is a model trained to reject or accept inputs 104 directed to the machine learning model 102. Accordingly, in some embodiments, the input filtering model 108 may be implemented as a classifier trained to classify inputs 104 directed to the machine learning model 102 as accepted or rejected.

Accordingly, training 202 the input filtering model 108 serves to train the input filtering model 108 to detect and reject certain inputs 104. For example, training 202 the input filtering model 108 may include training the input filtering model 108 to reject inputs 104 that would cause the machine learning model 102 to generate certain types of undesirable output 106. As will be described in further detail below, training 202 the input filtering model 108 includes training the input filtering model 108 to detect and reject jailbreak attacks. As will be understood by one skilled in the art, a jailbreak attack in the context of machine learning models 102 is an input 104 constructed to circumvent any safeguards that would prevent the machine learning model 102 from processing the input 104. In some embodiments, a jailbreak attack is a an input 104 constructed to circumvent these safeguards and cause the machine learning model 102 to produce an undesirable output that these safeguards were configured or designed to prevent.

In some embodiments, the input filtering model 108 may be initially trained using a data set prior to training 202 as described herein. For example, in some embodiments, the input filtering model 108 may be pretrained on a data set to provide a baseline level of understanding for interpreting inputs 104 of a particular modality, including natural language expressions. In some embodiments, training 202 the input filtering model 108 as described herein serves to fine-tune the input filtering model 108 to detect and reject jailbreak attacks and/or other types of malicious input 104 as can be appreciated.

In some embodiments, training 202 the input filtering model 108 includes iteratively training 202 the input filtering model 108 using a feedback loop between an adversarial training model 112 and the input filtering model 108. The adversarial training model 112 is another trained model trained to generate, as adversarial samples 110, jailbreak attacks or other types of inputs 104 that should be rejected by the input filtering model 108. Accordingly, in some embodiments, training 202 the input filtering model 108 includes generating 204, by an adversarial training model 112 and based on at least a portion of feedback 114 received from the input filtering model 108, an adversarial sample 110 for the input filtering model 108, wherein the adversarial sample 110 comprises a sample input 104 for a machine learning model 102 that should be rejected by the input filtering model 108.

In some embodiments, adversarial sample 110 is a synthetically generated input 104 for the input filtering model 108 and, by extension, the machine learning model 102, that should be rejected by the input filtering model 108 due to simulating a jailbreak attack designed to cause the machine learning model 102 to produce undesirable output 106. Accordingly, in some embodiments, the adversarial sample 110 is encoded in a modality processable or interpretable by the input filtering model 108 and the machine learning model 102. For example, where the machine learning model 102 includes a language model the adversarial sample 110 may include a natural language expression encoded as text or another modality as can be appreciated.

In some embodiments, the adversarial training model 112 generates 204 the adversarial sample 110 in response to a prompt, request, command, or other input to the adversarial training model 112 to generate an adversarial sample 110. In some embodiments, this input to the adversarial training model 112 may include, for example, a description of the functionality of the input filtering model 108 and/or a description of the role or intent of the adversarial training model 112 in generating adversarial samples 110. In some embodiments, as the adversarial training model 112 generates 204 the adversarial sample 110 using a feedback loop, generating 204 the adversarial sample 110 may be performed multiple times across multiple iterations. Accordingly, in some embodiments, the adversarial training model 112 may have received feedback 114 for previously generated adversarial samples 110. Accordingly, in some embodiments, the input to the adversarial training model 112 may include feedback 114, if any, received 208 for previously generated adversarial samples 110. This allows for the generated 204 adversarial sample 110 to use previously received feedback 114 in generating 204 new adversarial samples 110 for training the input filtering model 108. In some embodiments, this input to the adversarial training model 112 may also include other contextual information that may be useful in generating adversarial samples 110.

In some embodiments, training 202 the input filtering model 108 also includes providing 206 the adversarial sample 110 to the input filtering model 108 as training data, the input filtering model 108 is trained using the adversarial sample 110 and updates the underlying structure or encoding of the input filtering model 108 to reflect the adversarial sample 110, thereby fine-tuning the input filtering model 108 based on the adversarial sample 110. The particular approaches for training the input filtering model 108 depend on the architecture and implementation of the input filtering model 108. For example, where the input filtering model 108 is a neural network or other feed-forward network, training the input filtering model 108 may include back propagating the adversarial sample 110 through the input filtering model 108 and adjusting weights based on the adversarial sample 110, such as based on a loss function or other metric reflecting the accuracy of the input filtering model 108 in classifying the adversarial sample 110.

In some embodiments, training 202 the input filtering model 108 also includes receiving 208 feedback 114 from the input filtering model 108. The feedback 114 includes information relating to the processing of the adversarial sample 110 by the input filtering model 108 during training. For example, in some embodiments, the feedback 114 may include a gradient of a loss function calculated during training or another numerical representation of the accuracy of the input filtering model 108 in classifying the adversarial sample 110 (e.g., as accepted or rejected). As is set forth above, this feedback 114 may be provided to the adversarial training model 112 as part of an input that causes the adversarial training model 112 to generate 204 another adversarial training sample 110. This process of generating 204 adversarial training samples 110, providing 206 adversarial training samples 110 to the input filtering model 108 as training data and receiving 208 feedback 114 from the input filtering model 108 repeats across multiple iterations until a termination condition has been satisfied, thereby completing training 202 of the input filtering model 108.

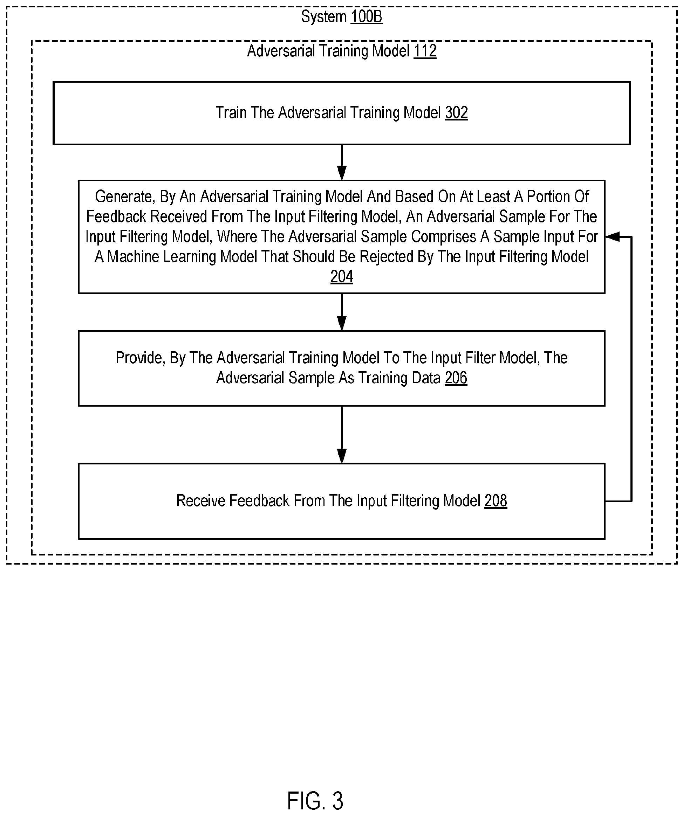

For further explanation, FIG. 3 sets forth a flowchart of another example method of automated adversarial training for filtering machine learning model inputs in accordance with some embodiments of the present disclosure. The method of FIG. 3 is similar to FIG. 2, differing in that the method of FIG. 3 also includes training 302 the adversarial training model 112. In some embodiments, the adversarial training model 112 is trained 302 prior to training 202 the input filtering model 108 so as to provide the adversarial training model 112 with the requisite knowledge to begin generating 204 adversarial samples 110. In some embodiments, this may include initially training the adversarial training model 112 with a knowledge base and/or fine-tuning the adversarial training model 112. For example, in some embodiments, the adversarial training model 112 may include a pre-trained model, such as a general purpose or off-the-shelf model, that is then fine-tuned with a knowledge base related to generating adversarial samples 110. As another example, in some embodiments, the adversarial training model 112 may be initially trained on a knowledge base that includes training data related to generating adversarial samples 110.

In some embodiments, the training data for the adversarial training model 112 may include descriptions of known jailbreaking techniques, types of inputs 104 that should be rejected by the input filtering model 108, or other descriptive information. In some embodiments, the training data for the adversarial training model 112 may include examples of adversarial samples 110. The training data for the adversarial training model 112 may also include other information as can be appreciated.

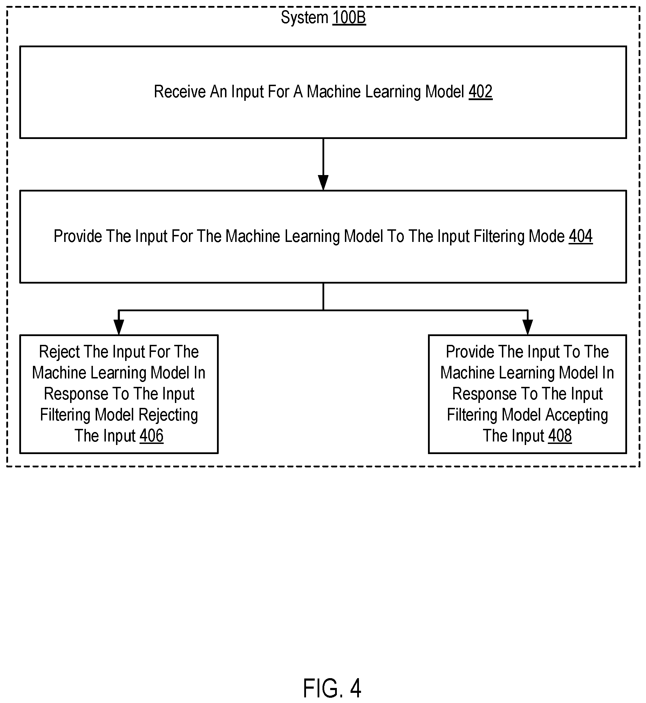

For further explanation, FIG. 4 sets forth a flowchart of an example method of filtering machine learning model inputs in accordance with some embodiments of the present disclosure. In the method of FIG. 4, the input filtering model 108 has been trained and has been deployed in conjunction with a machine learning model 102. In some embodiments, receiving 402 an input 104 for a machine learning model 102 may be performed using various approaches. In some embodiments, receiving 402 the input 104 for the machine learning model 102 includes receiving 402 the input 104 via an interface exposed by a model framework or other component of the system 100B. In some embodiments, an exposed application programming interface (API) or other interface enables submission of inputs 104 to the machine learning model 102. For example, in some embodiments, this interface may be directly exposed to users so as to allow users with access to the interface to query or otherwise submit inputs 104 for the machine learning model 102. As another example, in some embodiments, this interface may be exposed to allow other processes, services, or applications to submit inputs 104 for the machine learning model 102. In some embodiments, the input 104 may include user-generated content, application-generated content, or combinations thereof.

The method of FIG. 4 also includes providing 404 the input 104 for the machine learning model 102 to the input filtering model 108. The input filtering model 108 processes the input 104 and determines to either reject or accept the input 104. For example, where the input filtering model 108 is a classifier, the input filtering model 108 may classify a received input 104 as either accepted or rejected. The system 100B then processes the input 104 based on whether the input filtering model 108 accepts or rejects the input 104. Accordingly, in some embodiments, the method of FIG. 4 also includes rejecting 406 the input 104 for the machine learning model 102 in response to the input filtering model 108 rejecting the input 104. For example, in some embodiments, the input filtering model 108 rejects the input 104 by providing, as an output, an indication that the input 104 was rejected. In some embodiments, this indication may include a reason why the input 104 was rejected.

In some embodiments, rejecting 406 the input 104 prevents the machine learning model 102 from processing the input 104. In other words, in some embodiments, rejecting 406 the input 104 includes refraining from providing 408 the input 104 to the machine learning model 102 for processing. In some embodiments, a message or response may be provided in response to the received 402 input 104 (e.g., to a source of the input 104) indicating that the input 104 was rejected. In some embodiments, this message or response may include or otherwise be based on an indication from the input filtering model 108 that the input 104 was rejected.

In some embodiments, the machine learning model 102 may process an accepted input 104'; an input 104 accepted by the input filtering model 108. Accordingly, in some embodiments, the method of FIG. 4 also includes providing 408 the accepted input 104' to the machine learning model 102 in response to the input filtering model 108 accepting the input 104. In some embodiments, the machine learning model 102 generates an output 106 based on the accepted input 104'. For example, the machine learning model 102 may generate, as output 106, content described or otherwise based on the accepted input 104', information requested by the accepted input 104', or another output 106 as can be appreciated. In some embodiments, this output 106 and/or data based on this output 106 may be returned to a source of the received input 104 as a response to the input 104.

In some embodiments, data may be added to the input 104 as received 402 prior to providing 408 the input 104' to the machine learning model 102. For example, in some embodiments, the input 104 may be used to populate a template including additional data usable by the machine learning model 102 in processing the accepted input 104'. Continuing with this example, where the input 104 includes a prompt to an LLM or other language model, this input 104 may be incorporated into a prompt template by populating a variable or field of the prompt template. This prompt template may also include predefined instructions that guide the machine learning model 102 as to how to process the input 104'. This prompt template may also include additional variables or fields that may be populated using other data. For example, these additional fields or variables may be populated using data gathered by one or more agents through retrieval augmented generation (RAG). As another example, these additional fields or variables may be populated using data associated with a source of the input 104, such as attributes of a user or user account or other contextual information as can be appreciated. Accordingly, in some embodiments, providing 408 the accepted input 104' to the machine learning model 102 may include providing the accepted input 104' and this additional information to the machine learning model 102 for processing.

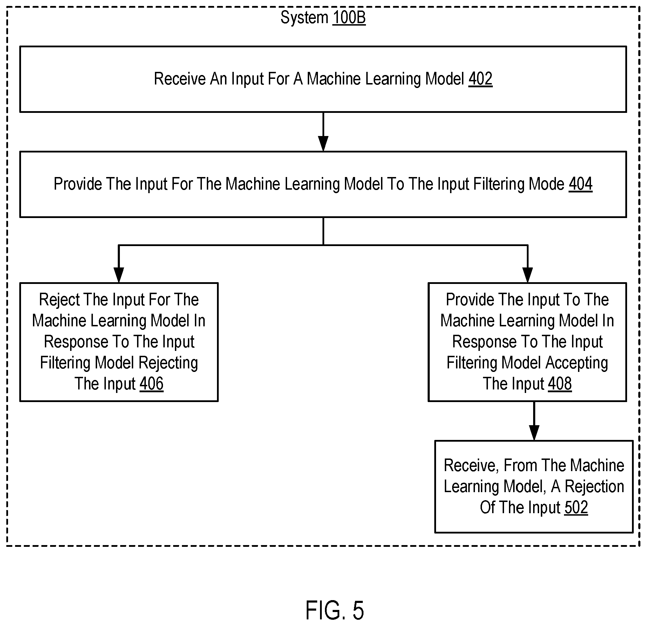

For further explanation, FIG. 5 sets forth a flowchart of another example method of filtering machine learning model inputs in accordance with some embodiments of the present disclosure. The method of FIG. 5 is similar to FIG. 4, differing in that the method of FIG. 5 also includes receiving 502, from the machine learning model 102, a rejection of the input 104'. As is set forth above, in some embodiments the machine learning model 102 may itself be trained or fine-tuned to reject an input. Accordingly, in some embodiments, it may be possible for the input filtering model 108 provide an accepted input 104; only for the machine learning model 102 to reject the accepted input 104'. Accordingly, in some embodiments, the machine learning model 102 may provide, as output 106, an indication that the input was rejected. In some embodiments, a message or response to the received 402 input 104 may be provided to a source of the input 104 based on or including the indication from the machine learning model 102 that the input 104 was rejected.

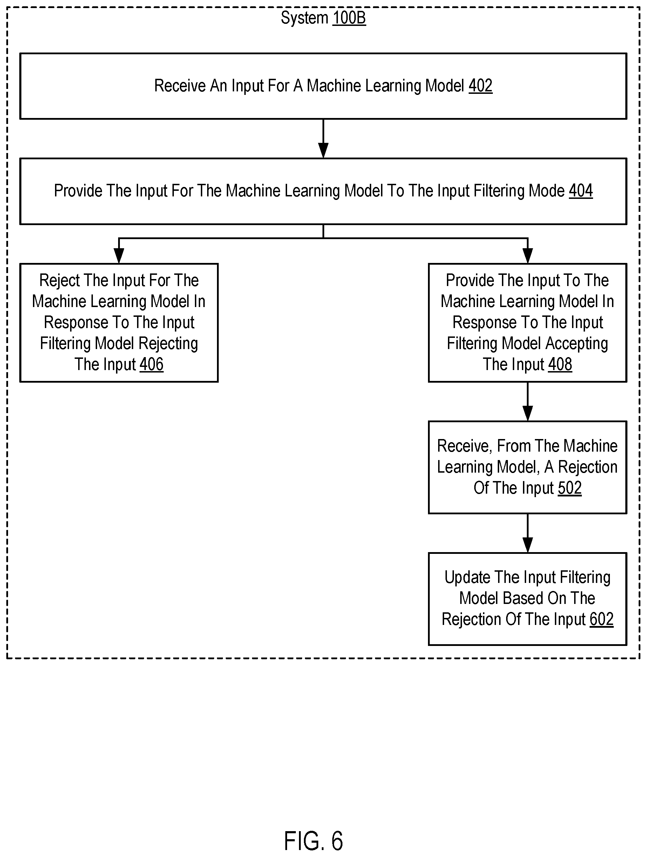

For further explanation, FIG. 6 sets forth a flowchart of another example method of filtering machine learning model inputs in accordance with some embodiments of the present disclosure. The method of FIG. 6 is similar to FIG. 5, differing in that the method of FIG. 6 also includes updating 602 the input filtering model 108 based on the rejection, by the machine learning model 102, of the accepted input 104'. Updating 602 the input filtering model 108 includes modifying the functionality of the input filtering model 108 based on the rejection, by the machine learning model 102, of the accepted input 104. In some embodiments, this includes training or fine-tuning the input filtering model 108 based on the input 104' that was accepted by the input filtering model 108 but rejected by the machine learning model 102. For example, in some embodiments, the input 104' that was accepted by the input filtering model 108, but rejected by the machine learning model 102 may be stored as a training data sample for use in later retraining or fine-tuning the input filtering model 108. In some embodiments, this training data sample may be added to a corpus of other training data for subsequent use. For example, in some embodiments, the input filtering model 108 may be periodically retrained or fine-tuned using training data accrued over time since the last training or fine-tuning.

As another example, in some embodiments, the rejection, by the machine learning model 102, of the input 104' that was accepted by the input filtering model 108 and/or the rejected input 104' may be included as contextual information provided to the input filtering model 108 with subsequent inputs 104 to the input filtering model 108. This information serves to indicate, to the input filtering model 108, a misclassified input (e.g., a false acceptance), allowing the input filtering model 108 to consider this misclassified input when classifying subsequent inputs 104 without the need to retrain or fine-tune the input filtering model 108 accordingly.

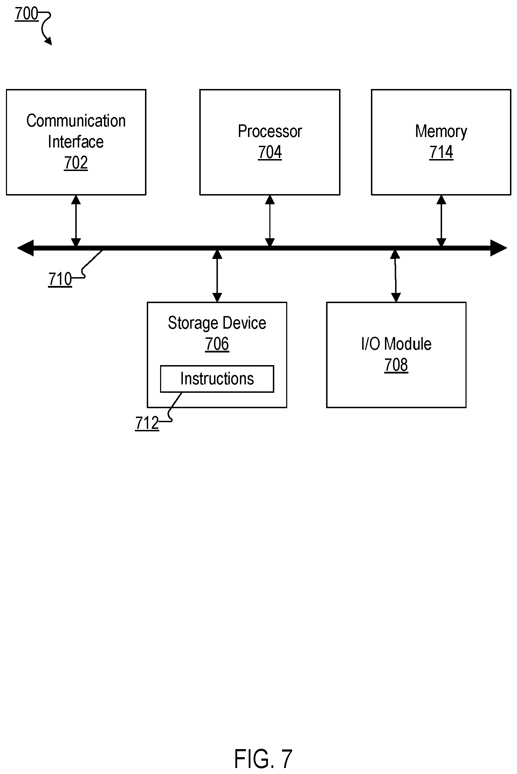

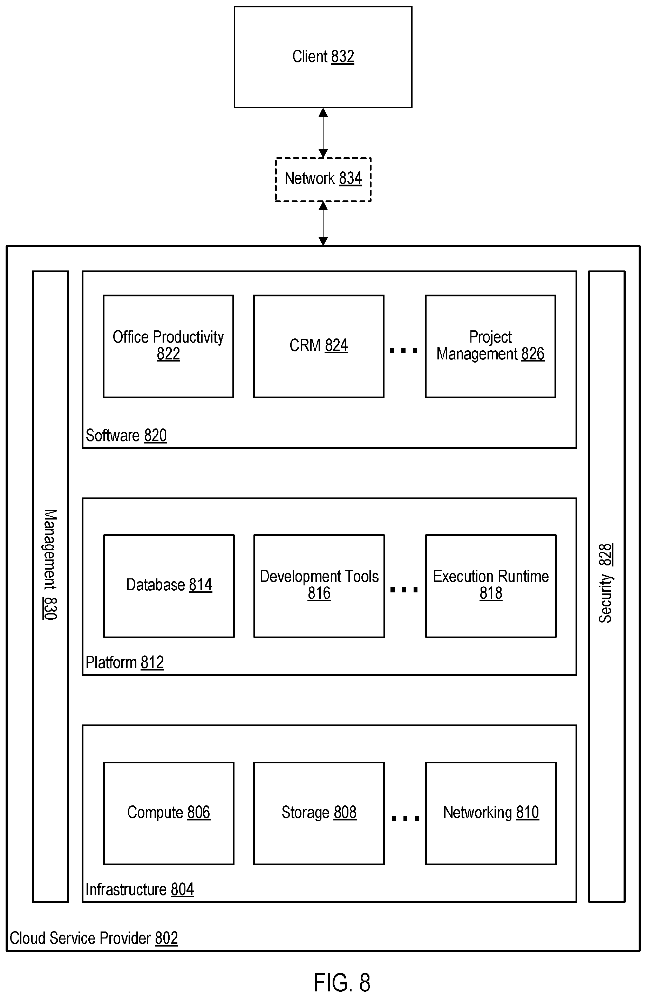

For further explanation, the sections included below provide details regarding technologies that may be used to support automated adversarial training for filtering machine learning model inputs in accordance with some embodiments. For example, FIG. 7 sets forth an example of a computing device that may be used for automated adversarial training for filtering machine learning model inputs in accordance with some embodiments. As an additional example of technologies that may be used to support automated adversarial training for filtering machine learning model inputs, FIG. 8 sets forth a block diagram of a cloud service provider 802 service architecture in accordance with some embodiments of the present disclosure.

For further explanation, FIG. 7 illustrates an exemplary computing device 700 that may be specifically configured to perform one or more of the processes described herein. As shown in FIG. 7, computing device 700 may include a communication interface 702, a processor 704, a storage device 706, an input/output (I/O) module 708, and computer memory 714 communicatively connected one to another via a communication infrastructure 710. While an exemplary computing device 700 is shown in FIG. 7, the components illustrated in FIG. 7 are not intended to be limiting. Additional or alternative components may be used in other embodiments. Components of computing device 700 shown in FIG. 7 will now be described in additional detail.

Communication interface 702 may be configured to communicate with one or more computing devices. Examples of communication interface 702 include, without limitation, a wired network interface (such as a network interface card), a wireless network interface (such as a wireless network interface card), a modem, an audio/video connection, and any other suitable interface.

Processor 704 generally represents any type or form of processing unit capable of processing data and/or interpreting, executing, and/or directing execution of one or more of the instructions, processes, and/or operations described herein. Processor 704 may perform operations by executing computer-executable instructions 712 (e.g., an application, software, code, and/or other executable data instance) stored in storage device 706.

Storage device 706 may include one or more data storage media, devices, or configurations and may employ any type, form, and combination of data storage media and/or device. For example, storage device 706 may include, but is not limited to, any combination of non-volatile media and/or volatile media. Electronic data, including data described herein, may be temporarily and/or permanently stored in storage device 706. For example, data representative of computer-executable instructions 712 configured to direct processor 704 to perform any of the operations described herein may be stored within storage device 706. In some examples, data may be arranged in one or more databases residing within storage device 706.

I/O module 708 may include one or more I/O modules configured to receive user input and provide user output. I/O module 708 may include any hardware, firmware, software, or combination thereof supportive of input and output capabilities. For example, I/O module 708 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 708 may include one or more devices for presenting output to a user, including, but not limited to, a graphics engine, a display (e.g., a display screen), one or more output drivers

(e.g., display drivers), one or more audio speakers, and one or more audio drivers. In certain embodiments, I/O module 708 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 700.

For further explanation and as an additional example of a supporting technology for automated adversarial training for filtering machine learning model inputs, FIG. 8 sets forth a block diagram of a cloud service provider service architecture in accordance with some embodiments. The cloud service provider 802 can deliver a variety of resources through a services-based consumption model where resources are consumed on-demand and as-a-service. Cloud service providers can provide services via cloud platforms such as, for example, Microsoft Azure^{™}, Amazon Web Services (AWS)^{™}, Google Cloud Platform (GCP)^{™}, and others. In FIG. 8, the cloud service provider 802 is accessed from a client device 834 via a network 832.

FIG. 8 depicts an embodiment where software 820 is delivered as a service. Software-as-a-service (SaaS) is a model where software applications are delivered over the internet as-a-service. Rather than installing and maintaining software locally, users can access software via a web browser or other network connected interface, eliminating the need for complex software and hardware management on the client-side. In FIG. 8, as examples of software 820 that can be delivered as-a-service, the illustrated embodiment includes office productivity 822 software, customer relationship management (CRM) 824 software, and project management 826 software. The office productivity 822 software can include applications designed to facilitate common business and personal tasks, including word processing applications, applications for spreadsheet creation, presentation design applications, and many others. The CRM 824 software can include applications for managing a business organization's relationships and interactions with customers and potential customers. The project management 826 software can include applications designed to help teams plan, organize, and manage projects efficiently by facilitating collaboration and tracking the progress of projects. Readers will appreciate that in other embodiments, other types of software may be delivered using a SaaS model.

FIG. 8 depicts an embodiment where platforms 812 can be delivered as a service. Platform-as-a-service (PaaS) is a model that provides cloud customers with platform resources that they can use to develop, run, and manage applications without the complexity of such deploying and managing such infrastructure on their own. In FIG. 8, as examples of platform 812 resources that can be delivered as-a-service, the illustrated embodiment includes database 814 services, development tools 816 services, and execution runtime 818 services. The database 814 services can be used to provide access to databases without management overhead for the user as the cloud service provider manages the provisioning, scaling, and maintenance of the databases. The development tools 816 services can provide developers with tools to design, develop, test, and deploy applications without needing to manage the underlying infrastructure. The execution runtime 818 services can provide environments where applications or other forms of computer program code can be executed, including services to scale the execution environment. Readers will appreciate that in other embodiments, other platform resources may be delivered using a PaaS model.

FIG. 8 depicts an embodiment where infrastructure 804 can be delivered as a service. Infrastructure-as-a-Service (IaaS) is a model that provides virtualized computing resources over the internet, such that infrastructure such as servers, storage, networks, and others may be leased on demand rather than purchasing and maintaining physical hardware. In FIG. 8, as examples of infrastructure 804 resources that can be delivered as-a-service, the illustrated embodiment includes compute 806 services, storage 808 services, and networking 810 services. The compute 806 services can be used to provide on-demand access to computational resources such as VMs, containers, and serverless functions, where the cloud service provider manages the provisioning, scaling, and maintenance of such resources. The storage 808 services can provide storage resources that can be used to store and access data, without the need for customers to purchase and manage on-premises physical storage resources. The networking 810 services can provide the ability to create and manage virtualized networking resources such as, for example, virtual private networks (VPNs), firewalls, load balancers, and more. Readers will appreciate that in other embodiments, other infrastructure resources may be delivered using a PaaS model.

The cloud service provider of FIG. 8 also provides management 830 resources. The management 830 resources can include, for example, tools and interfaces that enable customers to efficiently deploy, monitor, and manage, their cloud services. Such tools can include web-based management consoles, command-line interfaces (CLIs), APIs, automation tools, and other tools.

The cloud service provider of FIG. 8 also provides security 828 resources. The security 828 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, AWS EC2 instances or other form of cloud compute instances may be utilized in place of the virtual machines.

Readers will recognize that the methods, apparatus, systems, and techniques described above provide various advantages and features. For example, the input filtering model enables the deployment of different safety policies by supporting interchangeable or independently trained models across various locations. Because these models are relatively inexpensive to train, the models can be updated easily to reflect changing safety preferences or comply with regional requirements, all without requiring modifications to the primary, underlying language model.

Additionally, when an input that bypasses the input filtering model, but should have been rejected, is identified in a production environment, the input can be quickly addressed by retraining the input filtering model with that specific input or with a set of similar inputs generated by a language model. This retraining process is efficient and targeted, making it well-suited for rapid response to emerging threats. This approach also ensures that the performance and integrity of the underlying language model remain unaffected, preserving the underlying language model's general-purpose capabilities while enforcing safety constraints externally.

Additional advantages and features of the present disclosure can be further described by the following statements:
1. A method, comprising training an input filtering model by repeatedly generating, by an adversarial training model and based on at least a portion of feedback received from the input filtering model, an adversarial sample for the input filtering model, wherein the adversarial sample comprises a sample input for a machine learning model that should be rejected by the input filtering model; providing, by the adversarial training model to the input filtering model, the adversarial sample as training data; and receiving feedback from the input filtering model.
2. The method of statement 1, further comprising training the adversarial training model, wherein a training data set for training the adversarial training model comprises a plurality of adversarial samples.
3. The method of any combination of statements 1, 2, wherein the feedback received from the input filtering model comprises a numerical representation of an accuracy of the input filtering model in classifying the adversarial sample.
4. The method of any combination of statements 1, 2, 3, wherein the adversarial sample comprises a simulated jailbreak attack.
5. The method of any combination of statements 1, 2, 3, 4, further comprising receiving an input for the machine learning model; and providing the input to the input filtering model.
6. The method of any combination of statements 1, 2, 3, 4, 5, further comprising providing the input to the machine learning model in response to an acceptance of the input by the input filtering model.
7. The method of any combination of statements 1, 2, 3, 4, 5, 6, further comprising rejecting the input in response to a rejection of the input by the input filtering model.
8. The method of any combination of statements 1, 2, 3, 4, 5, 6, 7, further comprising updating the input filtering model based on a rejection of the input by the machine learning model.
9. A method, comprising receiving an input for a machine learning model; providing the input for the machine learning model to an input filtering model, the input filtering model trained using an adversarial training model, wherein the adversarial training model is configured to generate, based on at least a portion of feedback received from the input filtering model, adversarial samples for the machine learning model that should be rejected by the input filtering model; and processing the input for the machine learning model based on whether the input filtering model accepts or rejects the input.
10. The method of statement 9, wherein processing the input for the machine learning model comprises rejecting the input for the machine learning model in response to the input filtering model rejecting the input.
11. The method of any combination of statements 9, 10, wherein processing the input for the machine learning model comprises providing the input to the machine learning model in response to the input filtering model accepting the input.
12. The method of any combination of statements 9, 10, 11, further comprising receiving, from the machine learning model, a rejection of the input.
13. The method of any combination of statements 9, 10, 11, 12, further comprising updating the input filtering model based on the rejection of the input.
14. An apparatus for automated adversarial training for filtering machine learning model inputs, comprising a memory; and one or more processing devices, operatively coupled to the memory, the one or more processing devices configured to train an input filtering model, wherein, to train the input filtering model, the one or more processing devices are configured to repeatedly generate, by an adversarial training model and based on at least a portion of feedback received from the input filtering model, an adversarial sample for the input filtering model, wherein the adversarial sample comprises a sample input for a machine learning model that should be rejected by the input filtering model; provide, by the adversarial training model to the input filtering model, the adversarial sample as training data; and receive feedback from the input filtering model.
15. The apparatus of statement 14, wherein the one or more processing devices are further configured to train the adversarial training model, wherein a training data set for training the adversarial training model comprises a plurality of adversarial samples.
16. The apparatus of any combination of statements 14, 15, wherein the feedback received from the input filtering model comprises a numerical representation of an accuracy of the input filtering model in classifying the adversarial sample.
17. The apparatus of any combination of statements 14, 15, 16, wherein the adversarial sample comprises a simulated jailbreak attack.
18. The apparatus of any combination of statements 14, 15, 16, 17, further comprising receiving an input for the machine learning model; and providing the input to the input filtering model.
19. The apparatus of any combination of statements 14, 15, 16, 17, 18, further comprising providing the input to the machine learning model in response to an acceptance of the input by the input filtering model.
20. The apparatus of any combination of statements 14, 15, 16, 17, 18, 19, further comprising rejecting the input in response to a rejection of the input by the input filtering model.
21. Methods, apparatuses, and products for automated adversarial training for filtering machine learning model inputs include training an input filtering model by repeatedly: generating, by an adversarial training model and based on at least a portion of feedback received from the input filtering model, an adversarial sample for the input filtering model, where the adversarial sample includes a sample input for a machine learning model that should be rejected by the input filtering model; providing, by the adversarial training model to the input filtering model, the adversarial sample as training data; and receiving feedback from the input filtering model.

Although some embodiments are described largely in the context of a system, method, or in another way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in another execution environment.

In some examples, a storage device storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A storage device as referred to herein may include any storage medium that participates in providing data (e.g., instructions) that may be read and/or executed by a computing device (e.g., by a processor of a computing device). For example, a storage device may include any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method, comprising:
training an input filtering model (108) by repeatedly:
generating, by an adversarial training model (112) and based on at least a portion of feedback (114) received from the input filtering model (108), an adversarial sample (110) for the input filtering model (108), wherein the adversarial sample (110) comprises a sample input (104) for a machine learning model (102) that should be rejected by the input filtering model (108);
providing, by the adversarial training model (112) to the input filtering model (108), the adversarial sample (110) as training data; and
receiving feedback (114) from the input filtering model (108).

2. The method of claim 1, further comprising training the adversarial training model, wherein a training data set for training the adversarial training model comprises a plurality of adversarial samples.

3. The method of claim 1 or claim 2, wherein the feedback received from the input filtering model comprises a numerical representation of an accuracy of the input filtering model in classifying the adversarial sample.

4. The method of any one of the preceding claims, wherein the adversarial sample comprises a simulated jailbreak attack.

5. The method of any one of the preceding claims, further comprising:
receiving an input for the machine learning model; and
providing the input to the input filtering model.

6. The method of claim 5, further comprising providing the input to the machine learning model in response to an acceptance of the input by the input filtering model.

7. The method of claim 5, further comprising rejecting the input in response to a rejection of the input by the input filtering model.

8. The method of claim 7, further comprising updating the input filtering model based on a rejection of the input by the machine learning model.

9. A method, comprising:
receiving an input (104) for a machine learning model (102);
providing the input (104) for the machine learning model (102) to an input filtering model (108), the input filtering model (108) trained using an adversarial training model (112), wherein the adversarial training model (112) is configured to generate, based on at least a portion of feedback (114) received from the input filtering model (108), adversarial samples (110) for the machine learning model (102) that should be rejected by the input filtering model (108); and
processing the input (104) for the machine learning model (102) based on whether the input filtering model (108) accepts or rejects the input (104).

10. The method of claim 9, wherein processing the input for the machine learning model comprises rejecting the input for the machine learning model in response to the input filtering model rejecting the input.

11. The method of claim 9 or claim 10, wherein processing the input for the machine learning model comprises providing the input to the machine learning model in response to the input filtering model accepting the input.

12. The method of claim 11, further comprising receiving, from the machine learning model, a rejection of the input.

13. The method of claim 12, further comprising updating the input filtering model based on the rejection of the input.

14. An apparatus for automated adversarial training for filtering machine learning model inputs, comprising:
a memory; and
one or more processing devices, operatively coupled to the memory, the one or more processing devices configured to:
train an input filtering model (108), wherein, to train the input filtering model (108), the one or more processing devices are configured to repeatedly:
generate, by an adversarial training model (112) and based on at least a portion of feedback (114) received from the input filtering model (108), an adversarial sample (110) for the input filtering model (108), wherein the adversarial sample (110) comprises a sample input (104) for a machine learning model (102) that should be rejected by the input filtering model (108);
provide, by the adversarial training model (112) to the input filtering model (108), the adversarial sample (110) as training data; and
receive feedback (114) from the input filtering model (108).

15. The apparatus of claim 14, wherein the one or more processing devices are further configured to train the adversarial training model, wherein a training data set for training the adversarial training model comprises a plurality of adversarial samples.
